Europäisches Patentamt

European Patent Office

Office européen des brevets

(19)

(11) Veröffentlichungsnummer : **0 023 898**
**B1**

(12) **EUROPÄISCHE PATENTSCHRIFT**

(45) Veröffentlichungstag der Patentschrift :
**05.10.83**

(51) Int. Cl.³ : **B 21 F 27/20**

(21) Anmeldenummer : **80890084.9**

(22) Anmeldetag : **24.07.80**

(54) **Maschine zum selbsttätigen Herstellen von geschweissten Gitterträgern.**

(30) Priorität : **03.08.79 AT 5340/79**

(43) Veröffentlichungstag der Anmeldung :
**11.02.81 Patentblatt 81/06**

(45) Bekanntmachung des Hinweises auf die Patenterteilung : **05.10.83 Patentblatt 83/40**

(84) Benannte Vertragsstaaten :
**BE CH DE FR GB IT LI LU NL**

(56) Entgegenhaltungen :
**DE A 2 119 368**
**DE A 2 132 416**
**DE A 2 159 652**
**DE A 2 349 732**
**DE B 1 452 979**
**DE B 1 814 586**
**DE C 1 078 979**
**US A 2 645 252**
**US A 2 830 646**
**US A 3 487 861**

(73) Patentinhaber : **EVG Entwicklungs- u. Verwertungs-**
**Gesellschaft m.b.H.**
**Vinzenz-Muchitsch-Strasse 36**
**A-8011 Graz (AT)**

(72) Erfinder : **Schmidt, Gerhard, Dipl.-Ing.**
**Rosengasse 7**
**A-8042 Graz (AT)**
Erfinder : **Ritter, Klaus, Dipl.-Ing.**
**Peterstalstrasse 157**
**A-8042 Graz (AT)**
Erfinder : **Ritter, Gerhard, Dr. Dipl.-Ing.**
**Unterer Plattenweg 47**
**A-8043 Graz (AT)**
Erfinder : **Ritter, Josef, Dr. Dipl.-Ing.**
**Stenggstrasse 33**
**A-8043 Graz (AT)**

(74) Vertreter : **Schütz, Alfred, Dipl.-Ing. Dr. techn.**
**Dipl.-Ing. Dr. techn. Alfred Schütz Dipl.-Ing. Dr. techn.**
**Rudolf Pfeifer et al**
**Dr. phil. Engelbert Mrazek Dipl.-Ing. Walter Holzer**
**Dipl.-Ing. Otto Pfeifer Fleischmanngasse 9**
**A-1040 Wien (AT)**

# Maschine zum selbsttätigen Herstellen von geschweißten Gitterträgern

Die Erfindung betrifft eine Maschine zum selbsttätigen Herstellen von geschweißten Gitterträgern, die aus einem Obergurt, zumindest einem Untergurt und einer zickzackförmigen Ausfachung zwischen dem Obergurt und jedem Untergurt bestehen, mit einer schrittweise arbeitenden Zuführungseinrichtung für das die Gurte bildende Drahtmaterial, einer kontinuierlich arbeitenden Biegeeinrichtung zum Herstellen eines Vorrates an zickzackförmig gebogenem Ausfachungsdraht und einer intermittierend arbeitenden Schweißeinrichtung zum Verschweißen der Abbiegestellen der Ausfachung mit den Gurten, wobei zwischen der kontinuierlich arbeitenden Biegeeinrichtung und der intermittierend arbeitenden Schweißeinrichtung eine Pufferstrecke für den zickzackförmig gebogenen Ausfachungsdraht vorgesehen ist, der anschließend tangential in die Bahn des Obergurt- und Untergurtdrahtes eingeführt wird.

Bei einer bekannten Maschine dieser Gattung (DE-A1-2 349 732) wird die Pufferstrecke des zickzackförmig gebogenen Ausfachungsdrahtes dadurch gebildet, daß dieses von einer hochliegenden Biegeeinrichtung entgegengesetzt zur Durchlaufrichtung der Gurtdrähte durch die Maschine austretende, im Umriß streifenförmige Ausfachungsmaterial quer zur Streifenebene in Form einer Schleife um etwa 180° umgelenkt und sodann tangential in die Bahn der Gurtdrähte eingeführt wird. Die Größe der zu bildenden Schleife bleibt dabei dem Augenmaß und der Erfahrung des Maschinenführers überlassen. Der freie Raum für die Ausbildung der Schleife muß bei der bekannten Maschine hinlänglich groß bemessen sein, um bleibende Verformungen des Ausfachungsmaterials beim Durchlaufen der Schleife zu vermeiden. Derartige, quer zur Ebene des Ausfachungsmaterials erfolgende bleibende Verformungen wären für das Endprodukt der bekannten Maschine äußerst nachteilig, insbesondere deswegen, weil es sich bei den auf dieser herstellbaren Trägern ausschließlich um ebene Gebilde handelt. Räumliche Träger können mit der bekannten Maschine überhaupt nicht hergestellt werden, weil unter Ausbildung einer Drahtmaterialschleife bei für die Praxis annehmbarem Aufwand nur eine Ausfachung zum Schweißort zuführbar ist.

Es sei erwähnt, daß Einrichtungen zum Biegen eines gleichmäßig vorgeschobenen Drahtes in Zickzackform an sich beispielsweise aus der DE-A2-1 076 609 und aus der AT-B-317 648 bekannt sind. Sie sind im Prinzip so aufgebaut, daß auf zwei zueinander parallelen, in sich geschlossenen Bahnen gegeneinander um eine halbe Wellenlänge des gewünschten Zickzackverlaufes versetzte Reihen von Drahtumlenkstiften umlaufen, die von ihren Umlaufbahnen vorstehen, während in einer Tangentialebene zu diesen Umlaufbahnen zwei schwenkbare Biegearme vorgesehen sind, welche mittels eines an ihrem freien Ende angeordneten Stiftes abwechselnd den zu biegenden Draht erfassen und um einen Umlenkstift der zugeordneten Stiftreihe verlegen.

Es ist ferner bereits eine Maschine zum Herstellen von Gitterträgern mit einem Obergurt, zwei Untergurten und einer Ausfachung zwischen dem Obergurt und jedem Untergurt bekannt (DE-B-1 452 979), bei welcher sowohl die Biegeeinrichtungen für die Ausfachungen als auch die Schweißeinrichtung taktweise, d. h. in einzelnen durch Stillstand unterbrochenen Schritten arbeiten. Die zickzackförmig gebogenen Ausfachungsdrähte verlassen dabei die Biegevorrichtungen bereits in der Durchlaufrichtung der Gurtdrähte, und sie werden ohne besondere Führungen durch eine Transportvorrichtung schrittweise und tangential in die Bahn der Gurtdrähte hineingezogen. Da jeder Ausfachungsdraht im Raum zwischen der Biegeeinrichtung und der Schweißeinrichtung frei im Raum hängt, besteht bei dem aus wirtschaftlichen Gründen erforderlichen raschen Lauf der Maschine die Gefahr einer Verformung der Abbiegestellen infolge des Eigengewichtes und der Massenträgheit des Drahtmaterials, so daß trotz des taktweisen Vorschubes sowohl der Gurt- als auch der Ausfachungsdrähte die Herstellung einwandfreier Träger nicht gesichert ist.

Die Erfindung befaßt sich nun mit der Aufgabe, eine zur selbsttätigen Herstellung von Gitterträgern geeignete Maschine der einleitend angegebenen Gattung zu schaffen, mit der bei relativ geringem Platzbedarf ebene und räumliche Gitterträger hergestellt werden können und bei der auch bei hohem Arbeitstakt zwangsläufig ein vollständig regelmäßiger Verlauf der Ausfachung gesichert wird.

Diese Aufgabe wird erfindungsgemäß dadurch gelöst, daß die Pufferstrecke des zickzackförmig gebogenen Ausfachungsdrahtes durch diesen umgreifende, tangential in die Bahnen des Obergurtdrahtes bzw. eines Untergurtdrahtes einmündende Führungen gebildet sind, wobei diese Führungen stets in Durchlaufrichtung der Drähte orientiert sind und das zickzackförmig gebogene Drahtmaterial einen in Durchlaufrichtung der Drähte elastisch spannbaren und entspannbaren Drahtvorrat bildet, und daß in der Schweißeinrichtung nahe dem Vorschubweg jedes Untergurtdrahtes, in Vorschubrichtung um eine Wellenlänge der Zickzackform gegeneinander versetzt, zwei Justier- und Haltefinger vorgesehen sind, welche jeweils in den zur Schweißung dienenden Pausen zwischen zwei Vorschubschritten der Gurtdrähte in benachbarte untere Abbiegestellen des Ausfachungsdrahtes einschiebbar sind und dadurch die gewünschte Relativlage zwischen der Ausfachung und den Gurten während des Schweißens fixieren.

Durch das erfindungsgemäße Vorsehen von Führungen, welche die Abbiegestellen des zickzackförmig gebogenen Ausfachungsdrahtes umgreifen und tangential in die Bahn des Obergurtdrahtes bzw. eines Untergurtdrahtes einmünden, wird eine genaue, zwangsweise Seitenführung der Ausfachung bezüglich der anzuschweißenden Gurtdrähte erreicht. Während bei der bekannten Maschine das zickzackförmig gebogene Ausfachungsmaterial einen Drahtvorrat in Form einer Schleife veränderlicher Länge bildet, wird im Rahmen der Erfindung zwischen den vorgegebenen Seitenführungen dieses Drahtmaterials ein elastisch spann- und entspannbarer Drahtvorrat gebildet, in dem sich die Abstände zwischen den Abbiegestellen dieses Drahtmaterials abwechselnd vergrößern und verkleinern.

Durch die Verwendung zweier Justier- und Haltefinger, welche in benachbarte Abbiegestellen einführbar sind, werden aber die Abbiegezonen vor der Schweißung jeweils auf den zur Erzielung einer gleichmäßigen Ausfachung erforderlichen Sollabstand gebracht.

Weitere Vorteile der Erfindung gehen aus der nachfolgenden Beschreibung eines bevorzugten Ausführungsbeispiels unter Bezugnahme auf die Zeichnungen hervor. Es zeigt

Figur 1 einen schematischen Längsschnitt durch eine Maschine nach der Erfindung,

Figur 2 den Schweißbereich dieser Maschine, die

Figuren 3a und b die Gurtzuführungsvorrichtung im Längs-bzw. Querschnitt,

Figur 4 ein bevorzugtes Ausführungsbeispiel einer hydraulischen Betätigung der Schweißelektroden und

Figur 5 die Führung des Obergurtdrahtes im Schweißbereich.

Die Maschine ruht auf einem Maschinengestell 1, an dessen Oberseite eine Gleitführung 2 vorgesehen ist, in welcher in lotrechter Richtung ein Gehäuse 3 verschiebbar ist, in dem die Halte- und Schweißorgane für den Obergurtdraht 4 des Trägers untergebracht sind.

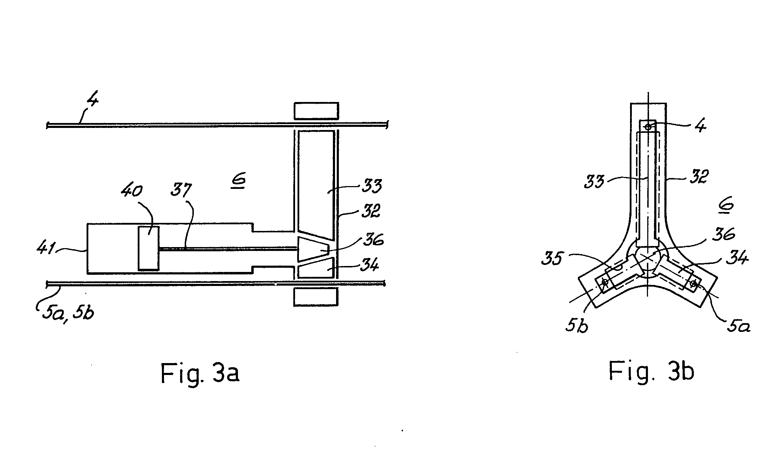

Der Obergurtdraht 4 wird zusammen mit zwei Untergurtdrähten 5a, 5b von einer allgemein mit 6 bezeichneten und in den Figuren 3a und 3b genauer dargestellten Zuführungseinrichtung schrittweise vorgeschoben, wobei das für die Gurtdrähte benötigte Drahtmaterial von nicht dargestellten Haspeln abgezogen wird. Auch die Ausfachungsdrähte 7a, 7b werden von nicht dargestellten Haspeln abgezogen, jedoch erfolgt der Vorschub dieser Drähte nicht schrittweise, sondern mit gleichförmiger Geschwindigkeit.

Die gesamte Maschine wird beispielsweise von einem Elektromotor 10 über Kettenräder 11, 12 und eine Kette 13 angetrieben. Das Kettenrad 12 ist mit einem Kegelrad 14 verbunden, welches mit einem zweiten Kegelrad 15 in Eingriff steht. Das Kegelrad 15 treibt einerseits über eine Welle 16 eine Biegevorrichtung 17 für die Ausfachungsdrähte, anderseits über ein Kegelrad 20 eine Welle 21 an.

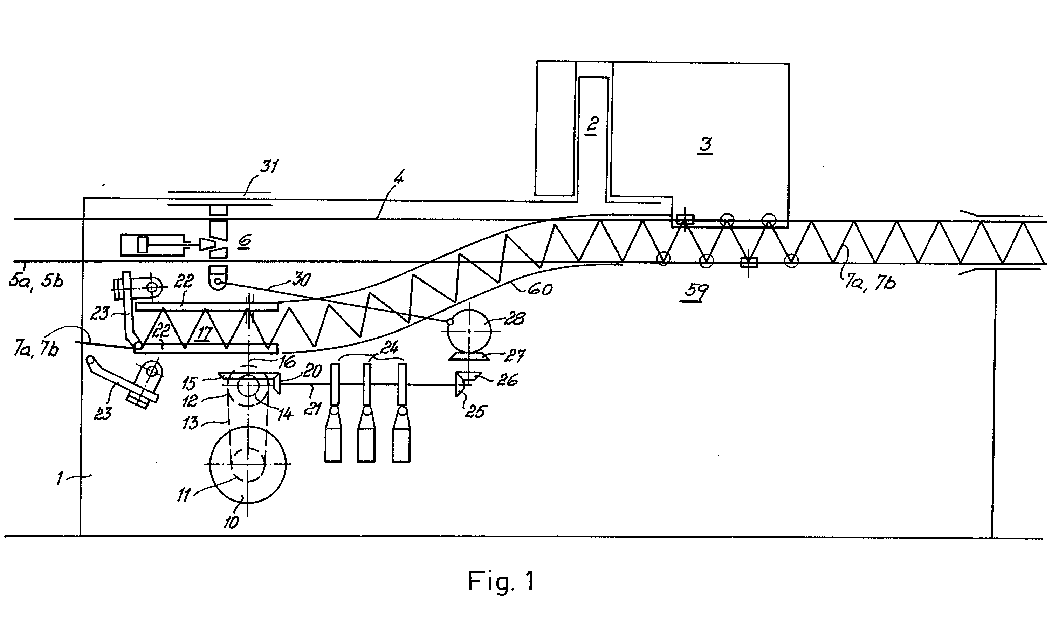

Die in Figur 1 nur schematisch dargestellte Biegevorrichtung für die Ausfachungsdrähte arbeitet im wesentlichen nach dem schon erläuterten, in der AT-PS 317 648 beschriebenen

Prinzip. Auf zwei umlaufenden endlosen Ketten 22, welche Drahtumlenkstifte tragen, wird von den in einer gemeinsamen Tangentialebene an die Umlaufbahnen der Ketten schwenkbaren Biegehebeln 23 der zulaufende Draht 7a für eine Ausfachung abwechselnd um einen Umlenkstift der dem betreffenden Hebel zugeordneten endlosen Kette 22 gelegt, so daß der Draht 7a zickzackförmig gebogen wird und sodann in Führungen 60 eintreten kann, welche im Querschnitt U-förmig ausgebildet sind und die Abbiegestellen des zickzackförmigen Drahtes umfassen. Diese Führungen verlaufen, wie Figur 1 erkennen läßt, mit S-förmiger Krümmung zur Schweißstelle der Maschine. Bei Verwendung von zwei Ausfachungsdrähten ist natürlich auch für den zweiten Draht 7b eine analoge Biegevorrichtung mit anschließenden Führungen für den gebogenen Draht vorgesehen.

Die Welle 21 trägt mehrere Nockenscheiben 24 und an ihrem dem Kegelrad 20 gegenüberliegenden Ende ein zweites Kegelrad 25. Über Kegelräder 25, 26 und 27 wird von der Welle 21 schließlich eine Kurbel 28 angetrieben, die über eine Pleuelstange 30 mit der Zuführungseinrichtung 6 für die Gurtdrähte in Verbindung steht. Diese in Figur 3 genauer dargestellte Einrichtung ist in einer Gleitführung 31 längsverschieblich im Maschinengestell 1 geführt. Im wesentlichen besteht sie aus einem dreiarmigen Gehäuse 32, welches in jedem der drei Arme eine Führung für einen der Gurtdrähte 4, 5a, 5b aufweist. Ferner sind im Gehäuse 32 drei Stempel 33, 34, 35 gleitend geführt, die gegen die in den Führungen ruhenden Gurtdrähte anstellbar sind und als Drahtklemmen wirken. Ein dreikantiger Keil 36 steht mit der Kolbenstange 37 eines in einem Arbeitszylinder 41 angeordneten Kolbens 40 in Verbindung. Wird der Kolben über nicht dargestellte Druckmittelleitungen in Richtung auf das Gehäuse 32 hin mit Druckmittel beaufschlagt, so spreizt der Keil 36 die Stempel 33, 34, 35 auseinander und stellt sie gegen die Gurtdrähte 4, 5a, 5b an, wodurch diese zwischen dem Gehäuse und den Stempeln mit Klemmschluß festgehalten werden, so daß sie mittels der Pleuelstange 30 von der Zuführungseinrichtung 6 gegen die Schweißstelle vorgeschoben werden können.

Während die Gurtdrähte 4, 5a, 5b durch die Zuführungseinrichtung 6 schrittweise zur Schweißstelle vorgeschoben werden, werden in der Biegevorrichtung 17 die mit gleichförmiger Geschwindigkeit zulaufenden Ausfachungsdrähte 7a, 7b zickzackförmig gebogen und mittels der Führungen 60 in die für die Schweißung erforderliche Relativlänge zu den Gurtdrähten 4, 5a, 5b gebracht.

Die Führungen 60 bilden gleichzeitig auch eine Art Speicher, in welchem die Ausfachungsdrähte 7a, 7b während der Stillstandzeiten der Gurtdrähte 4, 5a, 5b jeweils unter elastischer Verformung so lange festgehalten und wie der Balg einer Ziehharmonika zusammengeschoben werden, bis die Gurtdrähte einen weiteren Vorschubschritt ausführen. Sobald die Gurtdrähte diesen nächsten Vorschubschritt ausführen, kann sich die gespeicherte Federkraft der in den Führungen 60 ruhenden Ausfachungsdrähte entspannen, so daß es keiner nennenswerten Zugkraftwirkung der sich vorbewegenden Gurtdrähte auf die Ausfachungsdrähte bedarf, um die zwischen den Biegevorrichtungen und der Schweißstelle in den Führungen 60 befindlichen Ausfachungsdrähte in Bewegung zu setzen.

In der Schweißvorrichtung sind Justier- und Haltefinger 61 vorgesehen, welche ebenso wie die unteren Elektroden 42 und der Keil 36 der Zuführungseinrichtung 6 für die Gurtdrähte über hydraulisch beaufschlagte, von Nocken gesteuerte Kolben betätigt werden. Bei Beendigung eines Vorschubschrittes der Gurtdrähte greifen die im Abstand einer Wellenlänge des Zickzacks hintereinander angeordneten Finger 61 von oben her in zwei benachbarte untere Abbiegestellen jedes der beiden Ausfachungsdrähte 7a, 7b ein und erzwingen im Zusammenwirken mit Widerlagern 62 deren richtige Lage bezüglich der Untergurtdrähte 5a, 5b.

Durch die Finger 61 wird die Ausfachung auch daran gehindert, sich unter der Wirkung der kontinuierlich weiterarbeitenden Biegevorrichtung 17 weiterzubewegen, und darüberhinaus legen die Finger 61 auch die zwischen den beiden festgehaltenen unteren Abbiegestellen der Ausfachung befindliche obere Abbiegestelle räumlich genau fest, weil durch die beiden, diese drei Abbiegestellen verbindenden geraden Drahtabschnitte der Ausfachung und den festgelegten gegenseitigen Abstand der Finger ein Dreieck mit vorgegebener Seitenlänge definiert ist. Die so festgehaltene obere Abbiegestelle der Ausfachungsdrähte liegt dann genau zwischen den beiden oberen Elektroden 63, die vorzugsweise gleichfalls hydraulisch betätigt werden.

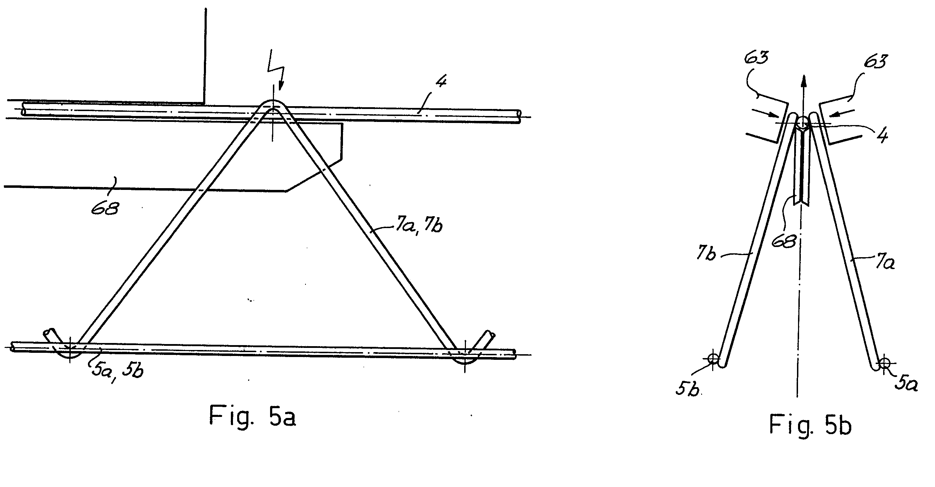

Das nach erfolgtem Anschweißen der Ausfachung an den Obergurtdraht 4 entstandene Gebilde ist, ebenso wie die beiden Untergurtdrähte, noch in jeder Richtung des Raumes bewegbar. Obere Führungen 64, die hydraulisch mit dem Obergurt 4 in Eingriff gebracht und von diesem wieder abgehoben werden können, sind in Richtung der Pfeile P1 verstellbar und feststellbar. Ebenso ist die mit den hydraulisch betätigbaren Anpreßstempeln 66 zusammenwirkende untere Führung 65 in Richtung der Pfeile P2 und P3 verstellbar und feststellbar. Durch ein Verstellen der Elemente 64 und 65 in den angegebenen Richtungen, bei dem diese Elemente gegenüber der feststehenden unteren Strombrücke 67 verschoben werden, kann nach Belieben ein vollständig gerader oder auch ein entgegen der unter Belastung zu erwartenden Verformung gekrümmter Träger hergestellt werden. Beim Schweißvorgang arbeiten die unteren Elektroden 42 im Gleichtakt mit den oberen Elektroden 63, wobei im Bereich der oberen Elektroden gemäß den Figuren 5a und 5b Führungen 68 vorgesehen sind, die ein Ausweichen des Obergurtdrahtes 4 unter dem Druck der schräg nach unten wirkenden oberen Elektroden 63 verhindern.

Die Elemente 63, 64 und 68 sind in dem Gehäuse 3 untergebracht und damit in ihrer Höhenlage gegenüber den Elementen 42, 61, 62, 65, 66 und 67 verstellbar, so daß auf der beschriebenen Maschine Träger unterschiedlicher Höhe hergestellt werden können.

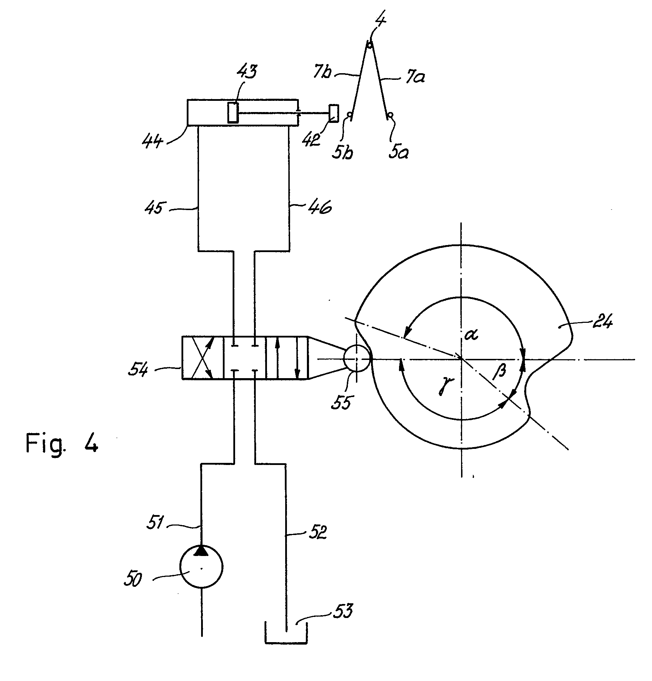

Als Beispiel für eine vorteilhafte Ausbildung der hydraulischen Steuerung aller steuerbaren Elemente der Maschine ist in Figur 4 die Steuerung der unteren Elektrode 42 der Schweißvorrichtung dargestellt.

Jede Elektrode 42 wird von einem Kolben 43 betätigt, der in einem Arbeitszylinder 44 gleitend geführt ist. Der Arbeitszylinder wird über zwei Druckmittelleitungen 45, 46 angespeist. Eine Pumpe 50 fördert Druckmittel in eine Leitung 51, und eine Leitung 52 führt zu einem Sammelbehälter 53 für das Druckmittel, aus welchem dieses über nicht dargestellte Leitungen schließlich wieder zur Pumpe zurückgeleitet wird. Ein hydraulisches Ventil 54 gestattet je nach seiner Stellung, alle vier Leitungen 45, 46, 51, 52 zu sperren oder wahlweise die Leitung 51 mit der Leitung 45 und gleichzeitig die Leitung 46 mit der Leitung 52 oder die Leitung 45 mit der Leitung 52 und gleichzeitig die Leitung 51 mit der Leitung 46 zu verbinden. Die Stellung des hydraulischen Ventils 54 wird von einer federnd an einer Nockenscheibe 24 angedrückten Abtastrolle 55 bestimmt.

In der in Figur 4 gezeigten Stellung sind alle vier Druckmittelleitungen gesperrt. Dreht sich der Steuernocken 24 im Gegenuhrzeigersinn aus der in Figur 4 gezeigten Stellung, so gelangt die Abtastrolle 55 auf den erhabenen Umfangsteil des Steuernockens 24 und verbleibt solange auf diesem Umfangsteil, bis der gesamte Winkelbereich α durchlaufen ist. In dieser Stellung werden die Leitungen 51 und 45 bzw. die Leitungen 46 und 52 miteinander verbunden und der Kolben 43 bringt die Elektrode 42 zur Anlage an das Schweißgut und hält sie in dieser Stellung fest.

Beim weiteren Drehen des Steuernockens 24 im Gegenuhrzeigersinn gelangt die Abtastrolle 55 nun in den Winkelbereich β. Während dieser durchlaufen wird, wird die Leitung 45 mit der Leitung 52 und die Leitung 51 mit der Leitung 46 verbunden. Die Beaufschlagung des Kolbens 43 ist bei dieser Stellung des Ventils entgegengesetzt wie vorhin, so daß der Kolben 43 die Elektrode 42 vom Schweißgut abhebt.

In der Darstellung nach Figur 4 bewegt sich bei dieser Ventilstellung die Elektrode 42 so lange nach links, bis die Abtastrolle 55 in den Winkelbereich γ eintritt. Sobald dies geschieht, ist wieder die gezeichnete Stellung erreicht und der Kolben 43 und mit ihm die Elektrode 42 bleiben in der während des Durchlaufens des Bereiches β durch die Abtastrolle 55 erreichten Stellung stehen. Wesentlich für die beschriebene Nockensteuerung ist es, daß der mögliche Hub des gesteuerten Kolbens hinlänglich groß gemacht wird, um dem Kolben beim Zurückziehen des von ihm betätigten Werkzeuges aus der Arbeitsstellung zu gestatten, eine Wegstrecke zurückzulegen, die proportional der Beaufschlagungszeit mit Druckmittel ist.

Anhand dieser Funktionsbeschreibung läßt sich auch der mit Hilfe dieser Nockensteuerung erreichbare Vorteil erklären. Der Weg, den der Kolben 43 und mit ihm die Elektrode 42 während des Durchlaufens des Winkelbereiches β zurücklegen, ist der hiefür erforderlichen Zeit proportional. Dreht sich der Steuernocken 24 langsam, dann verbleibt die Abtastrolle 55 länger innerhalb des Winkelbereiches β, als wenn sich der Steuernocken schneller dreht. Damit wird bei langsam drehendem Steuernocken 24 die Elektrode 42 weiter von dem Schweißgut entfernt, als dies bei schneller drehendem Steuernocken 24 der Fall wäre.

Da nun der von der Pumpe 50 erzeugte Druck konstant ist, wird beim Eintreten der Abtastrolle 55 in den Winkelbereich α die gleiche Zeit bis zum Anlegen der Elektrode 42 an das Schweißgut vergehen, wie sie für das Zurückziehen der Elektrode aus der Arbeitsstellung zur Verfügung stand. Bei schnell rotierendem Steuernocken 24, was gleichbedeutend mit hoher Arbeitsgeschwindigkeit der Maschine ist, werden die Elektroden somit in sehr kurzer Zeit wieder zur Anlage an das Schweißgut gebracht, da sie nur sehr kleine Wege zurücklegen, wogegen bei langsam laufender Maschine die für das Anlegen der Elektroden an das Schweißgut benötigte Zeitspanne ebenso wie der von den Elektroden zurückgelegte Weg länger sein wird.

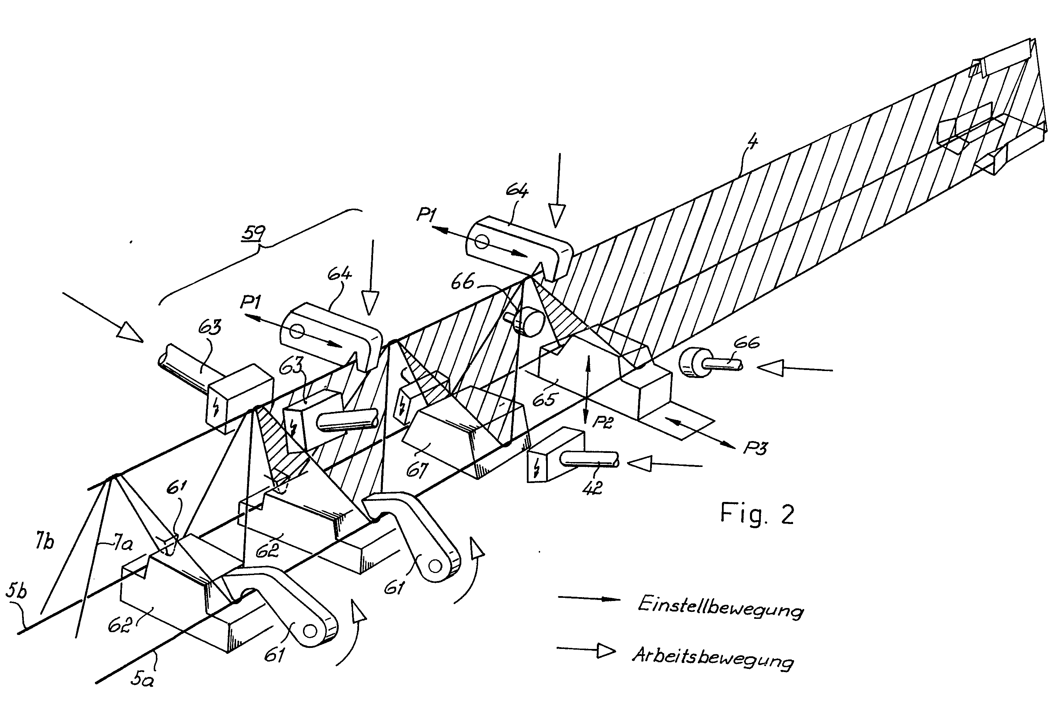

Ganz analoge hydraulische Steuerkreise, die ebenfalls von Steuernocken 24 betätigt werden, können für die als Drahtklemmen wirkenden Stempel 33, 34, 35 der Zuführeinrichtung nach den Figuren 3a und 3b und für die Justier- und Haltefinger 61 der Schweißvorrichtung 59 nach Figur 2 verwendet werden.

Die Geschwindigkeit, mit welcher beispielsweise die Zuführeinrichtung 6 von der Kurbel 28 längs der Gleitführung 31 hin- und herbewegt wird, hängt von der Umdrehungszahl der Kurbel 28 und damit von der Arbeitsgeschwindigkeit der gesamten Maschine ab. Je länger die Zeitspanne ist, die von dem Augenblick, in welchem von einem Ventil 54 der Befehl zum Anstellen der Stempel 33 an die Gurtdrähte 4, 5a, 5b gegeben wird, bis zu jenem Augenblick vergeht, in welchem diese Stempel die Gurtdrähte auch tatsächlich erfassen, umso weiter ist der Weg, den die Zuführeinrichtung 6 längs der Gleitführung 31 zurücklegt, ohne die Gurtdrähte mitzunehmen, ein Weg, der auch als « Leerhub » bezeichnet werden kann. Durch die vorhin beschriebene Nockensteuerung läßt sich der Leerhub auf eine konstante Größe festlegen, die völlig unabhängig von der Arbeitsgeschwindigkeit der Maschine ist, so daß der gewünschte Vorschubweg der Gurtdrähte stets präzise eingehalten wird.

Das beschriebene Ausführungsbeispiel der Erfindung läßt verschiedene Abwandlungen zu. Während der Antrieb der Elektroden 42, 63 und die Betätigung der Drahtklemmen 33, 34, 35 der Zuführeinrichtung 6 am besten, wie beschrieben, hydraulisch erfolgen, können andere Maschinenteile, wie insbesondere die Justier- und Haltefinger 61, die Führungen 64 und die Anpreßstempel 66, auch rein mechanisch oder elektromechanisch betätigt werden.

### Ansprüche

1. Maschine zum selbsttätigen Herstellen von geschweißten Gitterträgern, die aus einem Obergurt (4), zumindest einem Untergurt (5a, 5b) und einer zickzackförmigen Ausfachung (7a, 7b) zwischen dem Obergurt und jedem Untergurt bestehen, mit einer schrittweise arbeitenden Zuführungseinrichtung (6) für das die Gurte bildende Drahtmaterial, einer kontinuierlich arbeitenden Biegeeinrichtung (17) zum Herstellen eines Vorrates an zickzackförmig gebogenem Ausfachungsdraht und einer intermittierend arbeitenden Schweißeinrichtung (59) zum Verschweißen der Abbiegestellen der Ausfachung mit den Gurten, wobei zwischen der kontinuierlich arbeitenden Biegeeinrichtung (17) und der intermittierend arbeitenden Schweißeinrichtung (59) eine Pufferstrecke für den zickzackförmig gebogenen Ausfachungsdraht vorgesehen ist, der anschließend tangential in die Bahn des Obergurt- und Untergurtdrahtes eingeführt wird, dadurch gekennzeichnet, daß die Pufferstrecke des zickzackförmig gebogenen Ausfachungsdrahtes durch diesen umgreifende, tangential in die Bahnen des Obergurtdrahtes (4) bzw. eines Untergurtdrahtes (5a, 5b) einmündende Führungen (60) gebildet sind, wobei diese Führungen (60) stets in Durchlaufrichtung der Drähte (4, 5a, 5b) orientiert sind und das zickzackförmig gebogene Drahtmaterial einen in Durchlaufrichtung der Drähte (4, 5a, 5b) elastisch spannbaren und entspannbaren Drahtvorrat bildet, und daß in der Schweißeinrichtung (59) nahe dem Vorschubweg jedes Untergurtdrahtes (5a, 5b), in Vorschubrichtung um eine Wellenlänge der Zickzackform gegeneinander versetzt, zwei Justier- und Haltefinger (61) vorgesehen sind, welche jeweils in den zur Schweißung dienenden Pausen zwischen zwei Vorschubschritten der Gurtdrähte in benachbarte untere Abbiegestellen des Ausfachungsdrahtes (7a, 7b) einschiebbar sind und dadurch die gewünschte Relativlage zwischen der Ausfachung und den Gurten während des Schweißens fixieren.

2. Maschine nach Anspruch 1, mit Antrieb der Zuführeinrichtung (6) für die Gurtdrähte (4, 5a, 5b) und der Biegeeinrichtung (17) für den Ausfachungsdraht (7a, 7b) durch einen gemeinsamen Motor (10), dadurch gekennzeichnet, daß die intermittierend arbeitende Zuführeinrichtung (6) für die Gurtdrähte (4, 5a, 5b) diese Drähte erfassende Klemmen (33, 34, 35) aufweist, wobei für diese Klemmen und für die schwenkbaren Justier- und Haltefinger (61) sowie für die einstellbaren Schweißelektroden (42, 63) hydraulische Antriebe mit einem Druckmittelzylinder (44) vorgesehen sind, dessen Kolben (43) über ein federbelastetes, von einer Nockenscheibe (24) gesteuertes hydraulisches Ventil (54) beaufschlagbar ist, wobei die Länge des Druckmittelzylinders und die zur Rückführung des Kolbens dienende Einschaltzeit des Ventils (54) so aufeinander abgestimmt sind, daß die Länge des Rückzugweges des Kolbens (43) stets der Einschaltzeit proportional ist.

## Claims

1. Machine for the automatic production of welded lattice girders which consist of an upper chord (4), at least one lower chord (5a, 5b) and a zigzag strutting (7a, 7b) between the upper chord and each lower chord, said machine comprising a feed means (6) for the stepwise feeding of wire material for said chords, a continuously working bending means (17) for the production of a stock of zigzag-wise bent strutting wire and intermittently working welding means (59) for welding the points of bend of said strutting to said chords, wherein a buffer zone for the zigzag-wise bent strutting wire is provided between said continuously working bending means (17) and said intermittently working welding means (59) which wire thereupon is guided tangentially into the path of said upper chord wire and said lower chord wire, characterized in that said buffer zone for the zigzag-wise bent strutting wire is formed by guides (60) embracing said wire and leading tangentially into the paths of said upper chord wire (4) and a lower chord wire (5a, 5b), respectively, said guides (60) being always oriented in the running direction of the wires (4, 5a, 5b) and said zigzag-wise bent wire material forming a wire store which can be resiliently contracted and extended in the running direction of the wires (4, 5a, 5b), and in that two adjusting and holding fingers (61) are provided in said welding means (59) adjacent said feed path for each lower chord wire (5a, 5b), and offset with respect to one another in the direction of feed by one wavelength of said zigzag shape, which fingers are insertable into adjacent lower points of bend of said strutting wire (7a, 7b) during pauses used for the welding between two steps in the stepwise feed of said chord wires to thereby fix the desired relative positions between said strutting and said chords during welding.

2. Machine according to claim 1, wherein there is a common motor drive (10) for said feed means (6) for said chord wires (4, 5a, 5b) and said bending means (17) for said strutting wire (7a, 7b), characterized in that said stepwise operating feed means (6) for said chord wires (4, 5a, 5b) comprises clamps (33, 34, 35) adapted to grip said chord wires, hydraulic drives with a fluid pressure cylinder (44) being provided for these clamps and for said pivotable adjusting and holding fingers (61) as well as for the adjustable welding electrodes (42, 63), the piston (43) of said fluid pressure cylinder being acted upon by a springloaded hydraulic valve (54) which is controlled by a cam (24), the length of said fluid pressure cylinder and the duration of operation of said valve (54) for returning said piston being so matched relatively to one another that the length of the return travel of said piston (43) is always proportional to the duration of said operation of said valve.

## Revendications

1. Machine pour la fabrication automatique de poutres en treillis soudées qui sont formées d'une membrure supérieure (4), d'au moins une membrure inférieure (5a, 5b) et d'un treillage en zigzag (7a, 7b) entre la membrure supérieure et chaque membrure inférieure, comprenant un dispositif d'amenée pas à pas (6) pour la matière filiforme formant les membrures, un dispositif de coudage (17) fonctionnant en continu pour préparer une réserve de fil de treillage coudé en zigzag et un dispositif de soudage (59) fonctionnant par intermittence pour souder les endroits coudés du treillage aux membrures, une distance tampon étant prévue, entre le dispositif de coudage (17) fonctionnant en continu et le dispositif de soudage (59) fonctionnant par intermittence, pour le fil de treillage coudé en zigzag qui est ensuite introduit tangentiellement dans le trajet du fil de la membrure supérieure et de la membrure inférieure, caractérisée en ce que la distance tampon du fil de treillage coudé en zigzag est formée par des guides (60) enserrant ce fil et débouchant tangentiellement dans les trajets du fil de membrure supérieure (4) ou d'un fil de membrure inférieure (5a, 5b), ces guides (60) étant toujours orientés dans le sens du déplacement des fils (4, 5a, 5b) et la matière filiforme coudée en zigzag formant une réserve de fil pouvant être tendue et relâchée élastiquement dans le sens du déplacement des fils (4, 5a, 5b), et deux doigts d'ajustement et de maintien (61) sont prévus dans le dispositif de soudage (59) près du trajet d'avancement de chaque fil de membrure inférieure (5a, 5b), décalés dans le sens d'avancement d'une longueur de brisure ou d'onde du zigzag, ces doigts pouvant être introduits dans des endroits de coudage inférieurs voisins du fil de treillage (7a, 7b), chaque fois pendant les pauses entre deux pas d'avancement des fils de membrures destinées au soudage et fixant de ce fait la position relative souhaitée entre le treillage et les membrures pendant le soudage.

2. Machine suivant la revendication 1, dans laquelle le dispositif d'amenée (6) pour les fils de membrures (4, 5a, 5b) et le dispositif de coudage (17) pour le fil de treillage (7a, 7b) sont entraînés par un moteur (10) commun, caractérisée en ce que le dispositif d'amenée (6) pour les fils de membrures (4, 5a, 5b) qui fonctionne par intermittence comporte des pinces (33, 34, 35) qui saisissent ces fils, un mécanisme d'entraînement hydraulique comportant un vérin (44) étant prévu pour ces pinces et pour les doigts d'ajustement et de maintien pivotants (61) ainsi que pour les électrodes de soudage réglables (42, 63), le piston (43) de ce vérin pouvant être sollicité par l'intermédiaire d'un tiroir hydraulique (54) rappelé par ressort et commandé par un disque à came (24), étant entendu que la longueur du cylindre du vérin et le temps d'enclenchement du tiroir (54) servant au retour du piston sont accordés l'un par rapport à l'autre, de telle sorte que la longueur du trajet de retour du piston (43) soit toujours proportionnelle au temps d'enclenchement.

Fig. 1

Fig. 2

Fig. 3b

Fig. 3a

3

Fig. 4

Fig. 5b

Fig. 5a